# EUROPEAN PATENT SPECIFICATION

(11) **EP 4 203 134 B1**
(45) Date of publication and mention of the grant of the patent: **22.07.2026**
(21) Application number: 22804944.1
(22) Date of filing: 17.05.2022
(51) Int. Cl.: H01M 10/0567, H01M 10/052, H01M 10/0569, H01M 10/0525, H01M 10/0568, H01M 10/42

(54) **ELECTROLYTE FOR LITHIUM SECONDARY BATTERY AND LITHIUM SECONDARY BATTERY COMPRISING SAME**
ELEKTROLYT FÜR LITHIUMSEKUNDÄRBATTERIE UND LITHIUMSEKUNDÄRBATTERIE DAMIT
ÉLECTROLYTE POUR BATTERIE RECHARGEABLE AU LITHIUM ET BATTERIE RECHARGEABLE AU LITHIUM LE COMPRENANT

(30) Priority: 20.05.2021 KR 20210064492
(43) Date of publication of application: 28.06.2023
(73) Proprietor: LG Energy Solution, Ltd., Seoul 07335 (KR)
(72) Inventor: LEE, Jaegil, Daejeon 34122 (KR); JUNG, Unho, Daejeon 34122 (KR); KIM, Kihyun, Daejeon 34122 (KR)
(74) Representative: Goddar, Heinz J.
(86) International application number: PCT/KR2022/007011
(87) International publication number: WO 2022/245090

(56) References cited:
- EP-A1- 1 653 548
- EP-A1- 3 605 698
- WO-A1-2008/140271
- WO-A1-2013/079397
- CN-A- 109 786 737
- JP-A- 2003 308 874
- JP-A- 2003 308 874
- KR-A- 20030 015 709
- KR-A- 20060 037 593
- KR-A- 20080 059 182
- KR-A- 20180 114 631
- KR-A- 20180 114 631

## Description

### [Technical Field]

This application claims the benefit of priority based on Korean Patent Application No. 10-2021-0064492 filed on May 20, 2021.

The present invention relates to an electrolyte solution for a lithium secondary battery and a lithium secondary battery comprising the same.

### [Background Art]

As the application area of a secondary battery expands to electric vehicles (EVs) and energy storage devices (ESSs), etc., a lithium-ion secondary battery having a relatively low weight-to-energy storage density (~250 Wh/kg) has limitations in application to these products. In contrast, a lithium-sulfur secondary battery is in the spotlight as a next-generation secondary battery technology because it can theoretically realize a high energy storage density (~2,600 Wh/kg) compared to its weight.

The lithium-sulfur secondary battery refers to a battery system in which a sulfur-based material having a sulfur-sulfur bond (S-S bond) is used as a positive electrode active material and lithium metal is used as a negative electrode active material. Sulfur, which is the main material of the positive electrode active material, has advantages that it is very rich in resources worldwide, is not toxic, and has a low atomic weight.

In the lithium-sulfur secondary battery, when discharging the battery, lithium which is a negative electrode active material is oxidized while releasing electron and thus ionizing, and the sulfur-based material which is a positive electrode active material is reduced while accepting the electron. In that case, the oxidation reaction of lithium is a process by which lithium metal releases electron and is converted to lithium cation form. In addition, the reduction reaction of sulfur is a process by which the S-S bond accepts two electrons and is converted to a sulfur anion form. The lithium cation produced by the oxidation reaction of lithium is transferred to the positive electrode through the electrolyte and is combined with the sulfur anion generated by the reduction reaction of sulfur to form a salt. Specifically, sulfur before discharging has a cyclic S₈ structure, which is converted to lithium polysulfide (LiSₓ) by the reduction reaction. When the lithium polysulfide is completely reduced, lithium sulfide (Li₂S) is produced.

Sulfur, which is a positive electrode active material, is difficult to secure reactivity with electrons and lithium ions in a solid state due to its low electrical conductivity characteristics. In the existing lithium-sulfur secondary battery, in order to improve the reactivity of sulfur, an intermediate polysulfide in the form of Li₂Sₓ is generated to induce a liquid phase reaction and improve the reactivity. In this case, an ether-based solvent such as dioxolane and dimethoxy ethane, which are highly soluble for lithium polysulfide, is used as a solvent for the electrolyte solution.

However, when such an ether-based solvent is used, there is a problem that the lifetime characteristics of the lithium-sulfur battery are deteriorated due to various causes. For example, the lifetime characteristics of lithium-sulfur batteries may be deteriorated by the leaching of the lithium polysulfide from the positive electrode, the occurrence of a short due to the growth of dendrites on the lithium negative electrode and the deposition of by-products from the decomposition of the electrolyte solution, etc.

In particular, when such an ether-based solvent is used, it can dissolve a large amount of lithium polysulfide and thus has high reactivity. However, due to the nature of lithium polysulfide soluble in the electrolyte solution, the reactivity and lifetime characteristics of sulfur are affected depending on the content of the electrolyte solution.

Recently, in order to develop a lithium-sulfur secondary battery having a high energy density of 500Wh/kg or more, which is required for aircraft and next-generation electric vehicles, it is required that the loading amount of sulfur in the electrode is large and the content of the electrolyte solution is minimized.

However, due to the characteristics of the ether-based solvent, there is a problem that as the content of the electrolyte solution is decreased, the viscosity is increased rapidly during charging/discharging, and thus the overvoltage may be increased and the battery may be deteriorated.

Therefore, in order to prevent decomposition of the electrolyte solution and secure excellent lifetime characteristics, researches to add an additive are continuously being conducted. Nevertheless, the components and composition of the electrolyte solution that can prevent decomposition of the electrolyte solution and improve lifetime characteristics have not been clearly identified. In particular, it is not known in detail about the components and composition of the electrolyte solution suitable for the case of a pouch cell with a very small content of the electrolyte solution.

### [Prior Art Document]

### [Patent Document]

(Patent Document 1) Korean Laid-open Patent Publication No. 10-2007-0027512 (March 09, 2007), "ELECTROLYTES FOR LITHIUM-SULFUR ELECTROCHEMICAL CELLS"

JP 2003 308874 A discloses a nonaqueous electrolyte battery using a nonaqueous electrolyte containing benzo[1,4]dioxine, benzo[1,3]dioxole or its derivative.

KR 20180114631 A discloses an electrolyte for a lithium-sulfur battery and the lithium-sulfur battery comprising the same. The electrolyte contains a non-aqueous solvent, lithium salt, and calcium salt as an additive.

EP 1 653 548 A1 discloses an electrolyte for a lithium battery includes a non-aqueous organic solvent, a lithium salt, and an additive.

### [Disclosure]

### [Technical Problem]

Accordingly, in the present invention, it was confirmed that in the case of the electrolyte solution for the lithium secondary battery containing a lithium salt and a non-aqueous solvent, the performance of the lithium secondary battery could be improved by incorporating a benzo-dioxole-based compound or benzo-dioxane-based compound as an additive in order to prevent decomposition of the electrolyte solution of the lithium secondary battery and improve the lifetime characteristics, and solving the above problems, thereby completing the present invention.

Therefore, it is an object of the present invention to provide an electrolyte solution for a lithium secondary battery that prevents decomposition of the electrolyte solution and forms a stable film on the interface of the negative electrode, thereby preventing degradation of the electrolyte and the negative electrode and thus improving the lifetime characteristics of an electrolyte solution for a lithium secondary battery. In addition, it is another object of the present invention to provide a lithium secondary battery having improved performance by providing the electrolyte solution described above.

### [Technical Solution]

The above problems are solved in accordance with the subject-matterr of the independent claims. Further embodiments result from the subclaims.

In order to achieve the above objects, the present invention provides an electrolyte solution for a lithium secondary battery containing a lithium salt and a non-aqueous solvent, which further comprises a benzo-dioxole-based compound or benzo-dioxane-based compound as an additive. In particular, the present invention provides an electrolyte solution for a lithium secondary battery, which further comprises a benzo-dioxole-based compound or benzo-dioxane-based compound as an additive, wherein the benzo-dioxole-based compound or benzo-dioxane-based compound has a hydrogen or electron donating group at a carbon position located between two oxygen atoms therein; and
the non-aqueous solvent comprises a linear ether and a cyclic ether;
wherein the content of the benzo-dioxole-based compound or benzo-dioxane-based compound is 0.1 % by weight to 5 % by weight based on the total weight of the electrolyte solution; and
wherein the benzo-dioxole-based compound or benzo-dioxane-based compound is a compound represented by Chemical Formula 1 below: 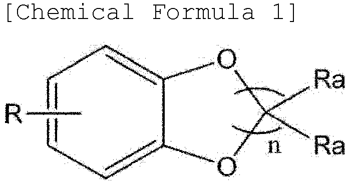
wherein, R group is a substituted or unsubstituted alkyl group having 1 to 6 carbon atoms, a substituted or unsubstituted aryl group having 6 to 10 carbon atoms, or a substituted or unsubstituted heteroaryl group having 5 to 10 carbon atoms,
the plurality of Ra groups are the same as or different from each other, and each independently represents hydrogen or an electron donating group, and
n is an integer of 1 to 3;
   or
the benzo-dioxole-based compound or benzo-dioxane-based compound is a compound represented by Chemical Formula 1-1 or Chemical Formula 1-2 below:

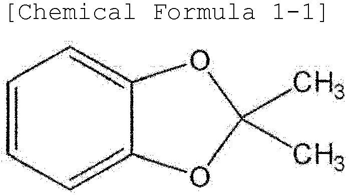

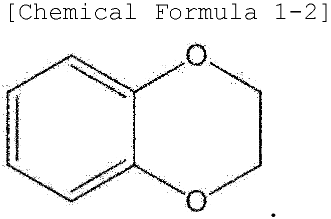

In addition, the present invention provides an electrolyte solution for a lithium secondary battery, wherein the plurality of Ra groups in Chemical Formula 1 are the same as or different from each other, and each independently is a substituent having a Hammet substituent constant of 0 or less.

In addition, the present invention provides an electrolyte solution for a lithium secondary battery, wherein the plurality of Ra groups in Chemical Formula 1 are the same as or different from each other, and each independently is selected from the group consisting of hydrogen, an amino group, an alkylamino group having 1 to 10 carbon atoms, a dialkylamino group having 2 to 20 carbon atoms, an arylamino group having 6 to 10 carbon atoms, a diarylamino group having 12 to 20 carbon atoms, a hydroxyl group, an alkyl group having 1 to 10 carbon atoms, an aryl group having 6 to 10 carbon atoms, an alkoxy group having 1 to 10 carbon atoms, an amide group having 1 to 10 carbon atoms, an ester group having 1 to 10 carbon atoms, an allyl group, an alkylallyl group having 1 to 10 carbon atoms, and a dialkylallyl group having 2 to 20 carbon atoms.

In addition, the present invention provides an electrolyte solution for a lithium secondary battery, wherein the lithium salt is at least one selected from the group consisting of LiCl, LiBr, LiI, LiClO₄, LiBF₄, LiB₁₀Cl₁₀, LiB (Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂ and lithium lower aliphatic carboxylate.

In addition, the present invention provides an electrolyte solution for a lithium secondary battery, wherein the linear ether is at least one selected from the group consisting of dimethyl ether, diethyl ether, dipropyl ether, dibutyl ether, diisobutyl ether, ethylmethyl ether, ethylpropyl ether, ethyl tert-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetra-ethylene glycol dimethyl ether, ethylene glycol divinylether, diethylene glycol divinylether, triethylene glycol divinylether, dipropylene glycol dimethylene ether, butylene glycol ether, diethylene glycol ethylmethyl ether, diethylene glycol isopropylmethyl ether, diethylene glycol butylmethyl ether, diethylene glycol tert-butylethyl ether, and ethylene glycol ethylmethyl ether.

In addition, the present invention provides an electrolyte solution for a lithium secondary battery, wherein the cyclic ether is selected from the group consisting of dioxolane, methyldioxolane, dimethyldioxolane, vinyldioxolane, methoxydioxolane, ethylmethyldioxolane, oxane, dioxane, trioxane, tetrahydrofuran, methyl tetrahydrofuran, dimethyl tetrahydrofuran, dimethoxy tetrahydrofuran, ethoxy tetrahydrofuran, dihydropyran, tetrahydropyran, furan and 2-methylfuran.

In addition, the present invention provides an electrolyte solution for a lithium secondary battery, wherein the content of the benzo-dioxole-based compound or benzo-dioxane-based compound is 0.1% by weight to 10% by weight based on the total weight of the electrolyte solution.

In addition, the present invention provides an electrolyte solution for a lithium secondary battery, wherein the electrolyte solution for the lithium secondary battery further contains a nitric acid-based compound.

In addition, the present invention provides an electrolyte solution for a lithium secondary battery, wherein the nitric acid-based compound is at least one selected from the group consisting of lithium nitrate, potassium nitrate, cesium nitrate, barium nitrate, ammonium nitrate, methyl nitrate, dialkyl imidazolium nitrate, guanidine nitrate, imidazolium nitrate and pyridinium nitrate.

In addition, the present invention provides a lithium secondary battery comprising the electrolyte solution described above, a positive electrode, a negative electrode and a separator.

In addition, the present invention provides a lithium secondary battery, wherein the lithium secondary battery is a lithium-sulfur secondary battery.

### [Advantageous Effects]

The electrolyte solution for the lithium secondary battery according to the present invention comprises a lithium salt and a non-aqueous solvent, and further comprises the benzo-dioxole-based compound or benzo-dioxane-based compound as an additive, and thus decomposition of the electrolyte solution during operation of the lithium secondary battery is prevented and a stable film is formed at the interface of the negative electrode to prevent degradation of the electrolyte and the negative electrode, thereby exhibiting the effect of improving the lifetime characteristics.

### [Description of Drawings]

FIG. 1 is a graph showing the lifetime characteristics of lithium secondary batteries according to Examples 1 to 3 of the present invention and Comparative Examples 1 to 2.
FIG. 2 is a graph showing the lifetime characteristics of lithium secondary batteries according to Example 1 of the present invention and Comparative Example 3.

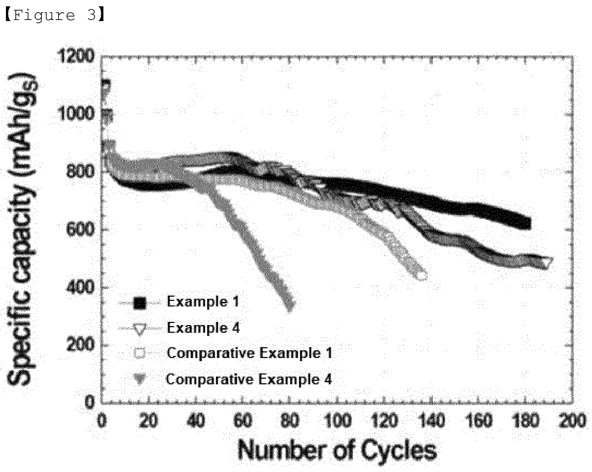

FIG. 3 is a graph showing the lifetime characteristics of lithium secondary batteries according to Examples 1 and 4 of the present invention and Comparative Examples 1 and 4.

### [Best Mode]

The embodiments provided according to the present invention can all be achieved by the following description. It is to be understood that the following description is to be understood as describing preferred embodiments of the present invention, and it should be understood that the present invention is not necessarily limited thereto.

The present invention provides an electrolyte solution for a lithium secondary battery containing a lithium salt and a non-aqueous solvent, which further comprises a benzo-dioxole-based compound or benzo-dioxane-based compound as an additive. In particular, the present invention provides an electrolyte solution for a lithium secondary battery containing a lithium salt and a non-aqueous solvent, which further comprises a benzo-dioxole-based compound or benzo-dioxane-based compound as an additive, wherein the benzo-dioxole-based compound or benzo-dioxane-based compound has a hydrogen or electron donating group at a carbon position located between two oxygen atoms therein; and
the non-aqueous solvent comprises a linear ether and a cyclic ether;
wherein the content of the benzo-dioxole-based compound or benzo-dioxane-based compound is 0.1 % by weight to 5 % by weight based on the total weight of the electrolyte solution; and
wherein the benzo-dioxole-based compound or benzo-dioxane-based compound is a compound represented by Chemical Formula 1 below: 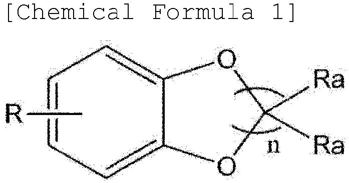
wherein, R group is a substituted or unsubstituted alkyl group having 1 to 6 carbon atoms, a substituted or unsubstituted aryl group having 6 to 10 carbon atoms, or a substituted or unsubstituted heteroaryl group having 5 to 10 carbon atoms,
the plurality of Ra groups are the same as or different from each other, and each independently represents hydrogen or an electron donating group, and
n is an integer of 1 to 3;
   or
the benzo-dioxole-based compound or benzo-dioxane-based compound is a compound represented by Chemical Formula 1-1 or Chemical Formula 1-2 below:

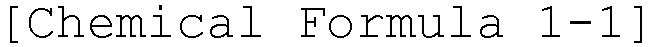

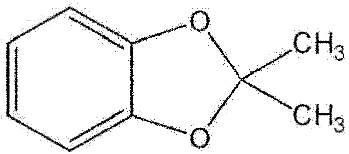

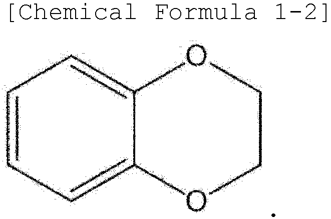

The benzo-dioxole-based compound or the benzo-dioxane-based compound according to the present invention has an increased electron density by substituting with an electron donating group at a carbon position with a low electron density located between two oxygen atoms, so that the reactivity with polysulfide is lowered, and thus it suppresses the loss of the positive electrode active material, thereby preventing the phenomenon of the rapid decrease in the capacity of the battery. As a result, it is possible to improve the lifetime characteristics of the lithium secondary battery.

In this regard, in the case of a conventional lithium-sulfur secondary battery, there is a problem that since the lithium polysulfide dissolved in the electrolyte and the components of the electrolyte cause a chemical reaction, thereby causing the loss of the positive electrode active material, the capacity of the battery is rapidly reduced. In particular, since the polysulfide has nucleophilicity, it reacts easily with an electrophilic material having a low electron density, and thus the carbon position between two oxygen atoms of the benzo-dioxole-based compound or benzo-dioxane-based compound has a high reactivity with polysulfide by the low electron density due to two oxygen atoms that attract electrons. In contrast, the benzo-dioxole-based compound or the benzo-dioxane-based compound, in which hydrogen or an electron donating group is substituted at a carbon atom positioned between the two oxygen atoms according to the present invention, has an increased electron density due to the electron donating group, and thus has a low reactivity with polysulfide. Due to this, it is possible to prevent the loss of the positive electrode active material. In contrast, if an electron withdrawing group is substituted at a carbon atom positioned between the two oxygen atoms of the benzo-dioxole-based compound or the benzo-dioxane-based compound, since the electron density is lowered and the reactivity with polysulfide is increased, there is a problem that the loss of the positive electrode active material is increased.

Therefore, in the benzo-dioxole-based compound or benzo-dioxane-based compound according to the present invention, it is more preferable that hydrogen or an electron donating group is substituted at a carbon atom positioned between the two oxygen atoms of the benzo-dioxole-based compound or the benzo-dioxane-based compound.

Among the compounds represented by Chemical Formula 1 according to the present invention, the plurality of Ra groups may be the same as or different from each other, and each independently may be a substituent having a Hammet substituent constant of 0 or less. Specific examples thereof may be selected from the group consisting of hydrogen, an amino group, an alkylamino group having 1 to 10 carbon atoms, a dialkylamino group having 2 to 20 carbon atoms, an arylamino group having 6 to 10 carbon atoms, a diarylamino group having 12 to 20 carbon atoms, a hydroxyl group, an alkyl group having 1 to 10 carbon atoms, an aryl group having 6 to 10 carbon atoms, an alkoxy group having 1 to 10 carbon atoms, an amide group having 1 to 10 carbon atoms, an ester group having 1 to 10 carbon atoms, an allyl group, an alkylallyl group having 1 to 10 carbon atoms, and a dialkylallyl group having 2 to 20 carbon atoms, and preferably may be selected from the group consisting of hydrogen, an amino group, an alkylamino group having 1 to 6 carbon atoms, a dialkylamino group having 2 to 12 carbon atoms, an arylamino group having 6 to 10 carbon atoms, a diarylamino group having 12 to 20 carbon atoms, a hydroxyl group, an alkyl group having 1 to 6 carbon atoms, an aryl group having 6 to 10 carbon atoms, an alkoxy group having 1 to 6 carbon atoms, an amide group having 1 to 6 carbon atoms, an ester group having 1 to 6 carbon atoms, an allyl group, an alkylallyl group having 1 to 6 carbon atoms, and a dialkylallyl group having 2 to 12 carbon atoms, and more preferably may be hydrogen or an alkyl group having 1 to 6 carbon atoms.

The content of the benzo-dioxole-based compound or benzo-dioxane-based compound according to the present invention is 0.1 % by weight to 10 % by weight, preferably 0.1 % by weight to 5 % by weight, and more preferably 0.1 % by weight to 3 % by weight, based on the total weight of the electrolyte solution. If the content of the benzo-dioxole-based compound or benzo-dioxane-based compound is less than the above range, the effect of forming a film (Solid Electrolyte Interphase, SEI) on the electrode surface is insignificant, so that the effect of improving the lifetime characteristics is insufficient. If the content of the benzo-dioxole-based compound or benzo-dioxane-based compound exceeds the above range, there may be a problem that resistance due to excess additives is increased. Therefore, it is preferable that the content of the benzo-dioxole-based compound or benzo-dioxane-based compound preferably satisfies the above range.

Meanwhile, the electrolyte solution for the lithium secondary battery of the present invention may include a lithium salt and a non-aqueous solvent, and the lithium salt is a material, which is easily soluble in non-aqueous organic solvent, and may be selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂ and lithium lower aliphatic carboxylate, and preferably LiN(CF₃SO₂)₂ may be used.

The concentration of the lithium salt may be 0.2 to 2 M, specifically 0.5 to 1.8 M, and more specifically 0.6 to 1.7 M, depending on various factors such as the exact composition of the electrolyte mixture, the solubility of the salt, the conductivity of the dissolved salt, the charging and discharging conditions of the battery, the operating temperature and other factors known in the lithium battery field. If the concentration of the lithium salt is less than the above range, the conductivity of the electrolyte may be lowered and thus the performance of the electrolyte may be deteriorated. If the concentration of the lithium salt exceeds the above range, the viscosity of the electrolyte may increase and thus the mobility of the lithium ion (Li⁺) may be reduced.

The non-aqueous solvent according to the present invention may include an ether-based solvent and a nonsolvent, and the ether-based solvent comprises a linear ether and a cyclic ether.

The linear ether may be selected from the group consisting of dimethyl ether, diethyl ether, dipropyl ether, dibutyl ether, diisobutyl ether, ethylmethyl ether, ethylpropyl ether, ethyl tert-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetra-ethylene glycol dimethyl ether, ethylene glycol divinylether, diethylene glycol divinylether, triethylene glycol divinylether, dipropylene glycol dimethylene ether, butylene glycol ether, diethylene glycol ethylmethyl ether, diethylene glycol isopropylmethyl ether, diethylene glycol butylmethyl ether, diethylene glycol tert-butylethyl ether, and ethylene glycol ethylmethyl ether, and preferably dimethoxyethane may be used.

The cyclic ether may be selected from the group consisting of dioxolane, methyldioxolane, dimethyldioxolane, vinyldioxolane, methoxydioxolane, ethylmethyldioxolane, oxane, dioxane, trioxane, tetrahydrofuran, methyl tetrahydrofuran, dimethyl tetrahydrofuran, dimethoxy tetrahydrofuran, ethoxy tetrahydrofuran, dihydropyran, tetrahydropyran, furan and 2-methylfuran, and preferably 2-methylfuran may be used.

The volume ratio of the linear ether and the cyclic ether may be 9:1 to 1:9, preferably 8:2 to 2:8, and more preferably 7:3 to 5:5.

If the volume ratio of the linear ether and the cyclic ether is out of the above range, the effect of improving the lifetime characteristics of the battery is insufficient and thus the desired effect cannot be obtained. Therefore, it is preferable that the volume ratio of the linear ether and the cyclic ether satisfies the above range.

The electrolyte solution for the lithium secondary battery of the present invention may further comprise nitric acid or nitrous acid-based compounds as an additive. The nitric acid or nitrous acid-based compounds have an effect of forming a stable coating on the lithium electrode and improving the charging/discharging efficiency. The nitric acid or nitrous acid-based compounds may be, but are not limited to, at least one selected from the group consisting of inorganic nitric acid or nitrous acid compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene, and the combinations thereof. Preferably, lithium nitrate (LiNO₃) may be used.

In addition, the electrolyte solution for the lithium secondary battery of the present invention may further comprise other additives for the purpose of improving charging/discharging characteristics, flame retardancy, and the like. Examples of the additives may comprise pyridine, triethylphosphite, triethanolamine, cyclic ether, ethylene diamine, n-glyme, hexaphosphoric triamide, nitrobenzene derivatives, sulfur, quinoneimine dyes, N-substituted oxazolidinone, N,N-substituted imidazolidine, ethylene glycol dialkyl ether, ammonium salt, pyrrole, 2-methoxy ethanol, aluminum trichloride, fluoroethylene carbonate (FEC), propen sultone (PRS), vinylene carbonate (VC) and the like.

The method for preparing the electrolyte solution for the lithium secondary battery of the present invention is not particularly limited in the present invention, and may be prepared by a conventional method known in the art.

The present invention provides a lithium secondary battery comprising the above-described electrolyte solution for the lithium secondary battery.

The lithium secondary battery may comprise a positive electrode, a negative electrode, a separator and an electrolyte solution interposed between the positive electrode and the negative electrode, and may comprise the electrolyte solution for the lithium secondary battery according to the present invention as an electrolyte solution.

In one embodiment, the lithium secondary battery may be a lithium-sulfur secondary battery.

The positive electrode may comprise a positive electrode current collector and a positive electrode active material applied to one or both surfaces of the positive electrode current collector.

The positive electrode current collector is for supporting the positive electrode active material, and is not particularly limited as long as it has high electrical conductivity without causing chemical changes in the battery. For example, copper, stainless steel, aluminum, nickel, titanium, palladium, sintered carbon; copper or stainless-steel surface-treated with carbon, nickel, silver or the like; aluminum-cadmium alloy or the like may be used.

The positive electrode current collector can have minute irregularities formed on its surface to enhance the bonding force with the positive electrode active material, and may be formed in various forms such as film, sheet, foil, mesh, net, porous body, foam, nonwoven fabric or the like.

The positive electrode active material may comprise a positive electrode active material and optionally an electrically conductive material and a binder.

The positive electrode active material may be at least one selected from the group consisting of elemental sulfur (S₈); Li₂Sₙ(n≥1), organic sulfur compound or carbon-sulfur polymer ((C₂Sₓ)n: x=2.5 ~ 50, n≥2). Preferably, the inorganic sulfur (S₈) can be used.

The positive electrode may further comprise at least one additive selected from a transition metal element, a group II element, a group III element, a sulfur compound of these elements, and an alloy of these elements and sulfur, in addition to the positive electrode active material.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg and the like, and the group II element may comprise Al, Ga, In, Ti and the like, and the group III element may comprise Ge, Sn, Pb, and the like.

The electrically conductive material is intended to improve electrical conductivity and is not particularly limited as long as it is an electronically conductive material that does not cause chemical change in the lithium secondary battery. Generally, carbon black, graphite, carbon fiber, carbon nanotube, metal powder, electrically conductive metal oxide, organic electrically-conductive material and the like can be used. Products that are currently marketed as electrically conductive materials may comprise acetylene black series (products from Chevron Chemical Company or Gulf Oil Company), Ketjen Black EC series (products from Armak Company), Vulcan XC-72(a product from Cabot Company) and Super P (a product from MMM). For example, acetylene black, carbon black, graphite, etc. may be used.

In addition, the positive electrode active material layer may further comprise a binder having a function of holding the positive electrode active material on the positive electrode current collector and connecting between active materials. As the binder, for example, various types of binders such as polyvinylidene fluoride-hexafluoropropylene (PVDF-co-HFP), polyvinylidene fluoride (PVDF), polyacrylonitrile, polymethyl methacrylate, styrenebutadiene rubber (SBR), carboxyl methyl cellulose (CMC) and the like can be used.

As the positive electrode, a positive electrode having a high sulfur loading may be used. The loading amount of sulfur may be 3.0 mAh/cm² or more, preferably 4.0 mAh/cm² or more, and more preferably 5.0 mAh/cm² or more.

The negative electrode may comprise a negative electrode current collector and a negative electrode active material positioned on the negative electrode current collector. Also, the negative electrode may be a lithium metal plate.

The negative electrode current collector is for supporting the negative electrode active material and is not particularly limited as long as it is electrochemically stable in the voltage range of the lithium secondary battery while having excellent conductivity, and for example, copper, stainless steel, aluminum, nickel, titanium, palladium, sintered carbon, or copper or stainless steel whose surface is treated with carbon, nickel, silver or the like, or aluminum-cadmium alloy or the like may be used.

The negative electrode current collector can enhance the bonding force with the negative electrode active material by having fine irregularities on its surface, and may be formed in various forms such as film, sheet, foil, mesh, net, porous body, foam, or nonwoven fabric.

The negative electrode active material may comprise a material capable of reversibly intercalating or deintercalating lithium ion (Li⁺), a material capable of reacting with lithium ion to reversibly form lithium containing compounds, lithium metal, or lithium alloy. The material capable of reversibly intercalating or deintercalating the lithium ion (Li⁺) can be, for example, crystalline carbon, amorphous carbon, or a mixture thereof. The material capable of reacting with the lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn). Preferably, the negative electrode active material may be lithium metal, and specifically, may be in the form of a lithium metal thin film or a lithium metal powder.

The method of forming the negative electrode active material layer is not particularly limited, and a method of forming a layer or film commonly used in the art may be used. For example, a method such as compression, coating, or deposition may be used. In addition, a case, in which a thin film of metallic lithium is formed on a metal plate by initial charging after assembling a battery without a lithium thin film in the current collector, is also comprised in the negative electrode of the present invention.

The separator is for physically separating the positive electrode and the negative electrode in the lithium secondary battery of the present invention, and can be used without any particular limitation as long as it is normally used as a separator in a lithium secondary battery, and in particular, is preferable as long as it has a low resistance to ion migration in the electrolyte and an excellent impregnating ability for the electrolyte solution.

The separator may be consisted of a porous substrate. Any porous substrate can be used as long as it is a porous substrate commonly used in electrochemical devices, and for example, a polyolefin-based porous membrane or nonwoven fabric may be used, but it is not particularly limited thereto.

Examples of the polyolefin-based porous membrane may be membranes formed of any polymer alone selected from polyethylene such as high density polyethylene, linear low density polyethylene, low density polyethylene, and ultrahigh molecular weight polyethylene, and polyolefin-based polymers such as polypropylene, polybutylene, and polypentene, or formed of a polymer mixture thereof.

In addition to the above-mentioned polyolefin-based nonwoven fabric, the nonwoven fabric may be a nonwoven fabric formed of, for example, any polymer alone selected from polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylenenaphthalate and the like, or formed of a polymer mixture thereof. The structure of the nonwoven fabric may be a spunbonded nonwoven fabric or a melt blown nonwoven fabric composed of long fibers.

The thickness of the porous substrate is not particularly limited, but may be 1 to 100 µm, and preferably 5 to 50 µm.

The size and porosity of the pores present in the porous substrate are also not particularly limited, but may be 0.001 to 50 µm and 10 to 95%, respectively.

The electrolyte solution comprises lithium ions, and is used for causing an electrochemical oxidation or reduction reaction between a positive electrode and a negative electrode through these, which is as described above.

The injection of the electrolyte solution can be performed at an appropriate stage of the manufacturing process of the electrochemical device depending on the manufacturing process and required properties of the final product. That is, it can be applied before assembling the electrochemical device or in the final stage of assembling the electrochemical device.

In the case of the lithium secondary battery according to the present invention, it is possible to perform laminating or stacking and folding processes of the separator and the electrode, in addition to the winding process which is a general process.

The shape of the lithium secondary battery is not particularly limited, and may be of various shapes such as a cylindrical shape, a laminate shape, or a coin shape.

### Mode for carrying out the invention

Hereinafter, preferred examples are presented to help the understanding of the present invention, but the following examples are provided to make the present invention easier to understand, and the present invention is not limited thereto.

### Example

### Preparation of electrolyte solution for lithium secondary battery

### Preparation Example 1

Lithium bis(fluoromethyl sulfonyl)imide (LiFSI) was dissolved in a non-aqueous solvent obtained by mixing 2-methyl furan:1,2-dimethoxyethane (DME) in a volume ratio of 3:7, so that its concentration is 0.75 M (mol/L), and lithium nitrate (LiNO₃) was added in an amount of 3.0 % by weight based on the total weight of the electrolyte solution, and then, a benzo-dioxole-based compound represented by Chemical Formula 1-1 below was added in an amount of 1 % by weight based on the total weight of the electrolyte solution to prepare an electrolyte solution for a lithium secondary battery.

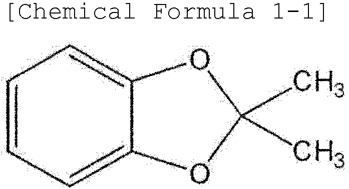

### Preparation Example 2

An electrolyte solution for a lithium secondary battery was prepared in the same manner as in Preparation Example 1, except that the benzo-dioxole-based compound represented by Chemical Formula 1-1 is added in an amount of 0.1 % by weight.

### Preparation Example 3

An electrolyte solution for a lithium secondary battery was prepared in the same manner as in Preparation Example 1, except that the benzo-dioxole-based compound represented by Chemical Formula 1-1 is added in an amount of 3.0 % by weight.

### Preparation Example 4

An electrolyte solution for a lithium secondary battery was prepared in the same manner as in Preparation Example 1, except that the benzo-dioxole-based compound represented by Chemical Formula 1-1 is replaced with a benzo-dioxane-based compound represented by Chemical Formula 1-2 below.

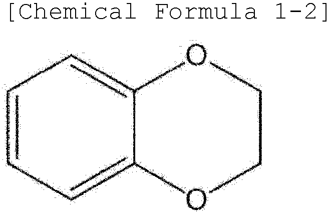

### Comparative Preparation Example 1

An electrolyte solution for a lithium secondary battery was prepared in the same manner as in Preparation Example 1, except that the benzo-dioxole-based compound represented by Chemical Formula 1-1 is not added.

### Comparative Preparation Example 2

An electrolyte solution for a lithium secondary battery was prepared in the same manner as in Preparation Example 1, except that the benzo-dioxole-based compound represented by Chemical Formula 1-1 is added in an amount of 10 % by weight.

### Comparative Preparation Example 3

An electrolyte solution for a lithium secondary battery was prepared in the same manner as in Preparation Example 1, except that the non-aqueous solvent obtained by mixing 2-methyl furan:1,2-dimethoxyethane (DME) in a volume ratio of 3:7 is replaced with a non-aqueous solvent obtained by mixing ethylene carbonate (EC): diethyl carbonate (DEC) in a volume ratio of 1:1.

### Comparative Preparation Example 4

An electrolyte solution for a lithium secondary battery was prepared in the same manner as in Preparation Example 1, except that the benzo-dioxole-based compound represented by Chemical Formula 1-1 is replaced with Comparative Compound A below (2,2-fluoro-1,3-benzodioxole).

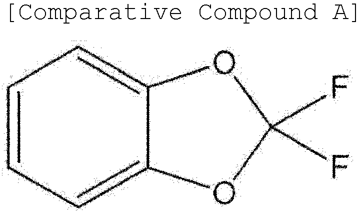

The contents of the non-aqueous solvent and the benzo-dioxole-based compound or benzo-dioxane-based compound in the electrolyte solutions for a lithium secondary battery of Preparation Examples 1 to 4 and Comparative Preparation Examples 1 to 4 are as shown in Table 1 below.

**Table 1:**

| | Non-aqueous solvent (volume ratio) | Benzo-dioxole-based compound or benzo-dioxane-based compound | Content of benzo-dioxole-based compound or benzo-dioxane-based compound (% by weight) |
|---|---|---|---|
| Preparation Example 1 | 2-methylfuran:DME (1:1) | compound of Chemical Formula 1-1 | 1 |
| Preparation Example 2 | 2-methylfuran:DME (1:1) | compound of Chemical Formula 1-1 | 0.1 |
| Preparation Example 3 | 2-methylfuran:DME (1:1) | compound of Chemical Formula 1-1 | 3 |
| Preparation Example 4 | 2-methylfuran:DME (1:1) | compound of Chemical Formula 1-2 | 1 |
| Comparative Preparation Example 1 | 2-methylfuran:DME (1:1) | - | - |
| Comparative Preparation Example 2 | 2-methylfuran:DME (1:1) | compound of Chemical Formula 1-1 | 10 |
| Comparative Preparation Example 3 | EC:DEC (1:1) | compound of Chemical Formula 1-1 | 1 |
| Comparative Preparation Example 4 | 2-methylfuran:DME (1:1) | Comparative Compound A | 1 |

### Experimental Example: Evaluation of lifetime characteristics

Sulfur was mixed with an electrically conductive material and a binder in acetonitrile using a ball mill to prepare a slurry of the positive electrode active material. At this time, carbon black was used as the electrically conductive material, and a binder of a mixed type of SBR and CMC was used as the binder, and the mixing ratio was set to 90:5:5 of sulfur:electrically conductive material:binder in weight ratio. The slurry of the positive electrode active material was applied to an aluminum current collector at a loading amount of 5.0 mAh/cm², and then dried to prepare a positive electrode having a porosity of 68%. In addition, lithium metal having a thickness of 45 µm was used as a negative electrode.

After positioning the positive electrode prepared by the above method and the negative electrode to face each other, a polyethylene separator having a thickness of 20 µm and a porosity of 45% was interposed between the positive electrode and the negative electrode.

After that, the electrolyte solutions for the lithium secondary battery according to Preparation Examples 1 to 4 and Comparative Preparation Examples 1 to 4 were injected into the case to manufacture coin cells of Examples 1 to 4 and Comparative Examples 1 to 4.

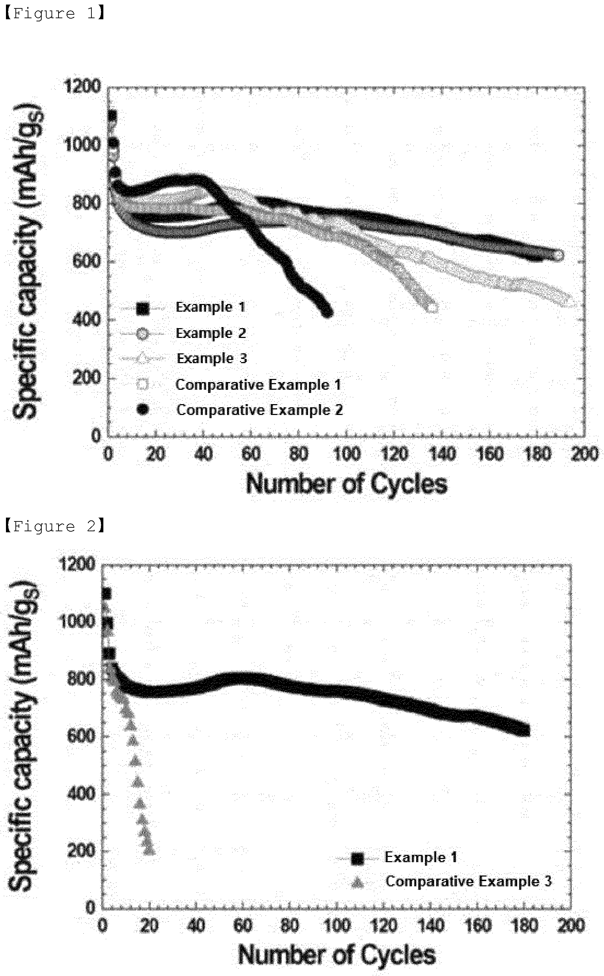

The coin cells prepared by the above method were repeatedly discharged and charged 2 times at a current density of 0.1 C at 25 °C and then while conducting 200 cycles at a current density of 0.3C/0.5 C, the lifetime cycle of batteries when the capacity retention rate was 80% was measured to confirm the lifetime characteristics of the batteries. At this time, the discharging was proceeded to the lower-limit voltage of 1.8V (vs. Li/Li+), and the charging was performed at the upper-limit voltage of 2.5V (vs. Li/Li+). The results obtained at this time are shown in Table 2 and FIG. 1.

**Table 2:**

| | Lifetime cycle (capacity retention rate 80%) |
|---|---|
| Example 1 | 128 |
| Example 2 | 142 |
| Example 3 | 96 |
| Example 4 | 98 |
| Comparative Example 1 | 85 |
| Comparative Example 2 | 57 |
| Comparative Example 3 | 9 |
| Comparative Example 4 | 45 |

As shown in Table 2 above, it was confirmed that in the case of lithium secondary batteries to which the electrolyte solutions for the lithium secondary battery according to Examples 1 to 4 are applied, the lifetime characteristics of the batteries were excellent, as compared to the lithium secondary batteries to which the electrolyte solutions for the lithium secondary battery according to Comparative Examples 1 to 4 were applied. Specifically, it can be confirmed that by using the electrolyte solutions for the lithium secondary battery according to Examples 1 to 4 having the content of the benzo-dioxole-based compound or benzo-dioxane-based compound represented by Chemical Formula 1-1 or 1-2 in the non-aqueous solvent of 0.1 % by weight to 3 % by weight, the lithium secondary batteries according to the present invention form a stable SEI (Solid-Electrolyte Interphase) film on the lithium negative electrode and thus suppress the reaction between lithium and polysulfide and the decomposition of the electrolyte solution, thereby exhibiting an effect of improving the lifetime characteristics of the battery.

On the other hand, if the benzo-dioxole-based compound or benzo-dioxane-based compound was not contained (Comparative Example 1) or an excessive amount was contained (Comparative Example 2), no improvement in lifetime characteristics was observed. In addition, it was confirmed that if a carbonate-based solvent is used as a non-aqueous solvent (Comparative Example 3) and if a benzo-dioxole-based compound (Comparative Compound A) having an electron withdrawing group is used as an additive (Comparative Example 4), the lifetime characteristics are remarkably deteriorated.

When considering these points, if the electrolyte solution for the lithium secondary battery containing the benzo-dioxole-based compound or benzo-dioxane-based compound according to the present invention is used, the lifetime characteristics of the battery are improved, as compared to that of a conventional lithium secondary battery.

All simple modifications and variations of the present invention fall within the scope of the present invention, and the specific scope of protection of the present invention will become apparent from the appended claims.

## Claims

1. An electrolyte solution for a lithium secondary battery comprising a lithium salt, a non-aqueous solvent and an additive,
wherein the additive contains a benzo-dioxole-based compound or benzo-dioxane-based compound, and
the benzo-dioxole-based compound or benzo-dioxane-based compound has a hydrogen or electron donating group at the carbon position between two oxygen atoms; and
the non-aqueous solvent comprises a linear ether and a cyclic ether;
wherein the content of the benzo-dioxole-based compound or benzo-dioxane-based compound is 0.1 % by weight to 5 % by weight based on the total weight of the electrolyte solution; and
wherein the benzo-dioxole-based compound or benzo-dioxane-based compound is a compound represented by Chemical Formula 1 below: 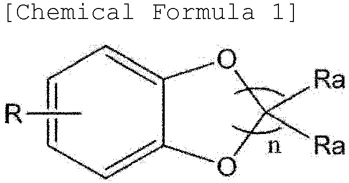
wherein, R group is a substituted or unsubstituted alkyl group having 1 to 6 carbon atoms, a substituted or unsubstituted aryl group having 6 to 10 carbon atoms, or a substituted or unsubstituted heteroaryl group having 5 to 10 carbon atoms,
the plurality of Ra groups are the same as or different from each other, and each independently represents hydrogen or an electron donating group, and
n is an integer of 1 to 3;
or
the benzo-dioxole-based compound or benzo-dioxane-based compound is a compound represented by Chemical Formula 1-1 or Chemical Formula 1-2 below:

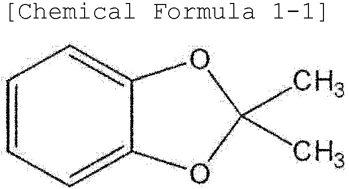

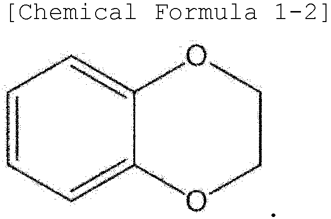

2. The electrolyte solution for the lithium secondary battery according to claim 1, wherein the plurality of Ra groups are the same as or different from each other, and are each independently a substituent having a Hammet substituent constant of 0 or less.

3. The electrolyte solution for the lithium secondary battery according to claim 1, wherein the plurality of Ra groups are the same as or different from each other, and each independently is selected from the group consisting of hydrogen, an amino group, an alkylamino group having 1 to 10 carbon atoms, a dialkylamino group having 2 to 20 carbon atoms, an arylamino group having 6 to 10 carbon atoms, a diarylamino group having 12 to 20 carbon atoms, a hydroxyl group, an alkyl group having 1 to 10 carbon atoms, an aryl group having 6 to 10 carbon atoms, an alkoxy group having 1 to 10 carbon atomsan allyl group, .

4. The electrolyte solution for the lithium secondary battery according to claim 1, wherein the lithium salt is at least one selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, and lithium lower aliphatic carboxylate.

5. The electrolyte solution for the lithium secondary battery according to claim 1, wherein the linear ether is selected from the group consisting of dimethyl ether, diethyl ether, dipropyl ether, dibutyl ether, diisobutyl ether, ethylmethyl ether, ethylpropyl ether, ethyl tert-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetra-ethylene glycol dimethyl ether, ethylene glycol divinylether, diethylene glycol divinylether, triethylene glycol divinylether, dipropylene glycol dimethylene ether, butylene glycol ether, diethylene glycol ethylmethyl ether, diethylene glycol isopropylmethyl ether, diethylene glycol butylmethyl ether, diethylene glycol tert-butylethyl ether, and ethylene glycol ethylmethyl ether.

6. The electrolyte solution for the lithium secondary battery according to claim 1, wherein the cyclic ether is selected from the group consisting of dioxolane, methyldioxolane, dimethyldioxolane, vinyldioxolane, methoxydioxolane, ethylmethyldioxolane, oxane, dioxane, trioxane, tetrahydrofuran, methyl tetrahydrofuran, dimethyl tetrahydrofuran, dimethoxy tetrahydrofuran, ethoxy tetrahydrofuran, dihydropyran, tetrahydropyran, furan, and 2-methylfuran.

7. The electrolyte solution for the lithium secondary battery according to claim 1, further comprising a nitric acid-based compound.

8. The electrolyte solution for the lithium secondary battery according to claim 9, wherein the nitric acid-based compound is at least one selected from the group consisting of lithium nitrate, potassium nitrate, cesium nitrate, barium nitrate, ammonium nitrate, methyl nitrate, dialkyl imidazolium nitrate, guanidine nitrate, imidazolium nitrate, and pyridinium nitrate.

9. A lithium secondary battery comprising the electrolyte solution of any one of claims 1 to 8; a positive electrode; a negative electrode; and a separator.

10. The lithium secondary battery of claim 9, wherein the lithium secondary battery is a lithium-sulfur secondary battery.

## Patentansprüche

1. Elektrolytlösung für eine Lithium-Sekundärbatterie, umfassend ein Lithiumsalz, ein nichtwässriges Lösungsmittel und ein Additiv,
wobei das Additiv eine Benzodioxol-basierte Verbindung oder eine Benzodioxan-basierte Verbindung enthält, und
die Benzodioxol-basierte Verbindung oder die Benzodioxan-basierte Verbindung eine Wasserstoff- oder Elektronendonorgruppe an der Kohlenstoffposition zwischen zwei Sauerstoffatomen aufweist; und
das nichtwässrige Lösungsmittel einen linearen Ether und einen cyclischen Ether umfasst;
wobei der Gehalt der Benzodioxol-basierten Verbindung oder der Benzodioxan-basierten Verbindung 0,1 Gew.-% bis 5 Gew.-%, bezogen auf das Gesamtgewicht der Elektrolytlösung, beträgt; und
wobei die Benzodioxol-basierte Verbindung oder die Benzodioxan-basierte Verbindung eine Verbindung ist, die durch die folgende chemische Formel 1 dargestellt wird: 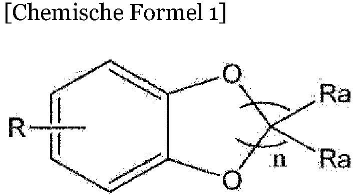
wobei die R-Gruppe eine substituierte oder unsubstituierte Alkylgruppe mit 1 bis 6 Kohlenstoffatomen, eine substituierte oder unsubstituierte Arylgruppe mit 6 bis 10 Kohlenstoffatomen oder eine substituierte oder unsubstituierte Heteroarylgruppe mit 5 bis 10 Kohlenstoffatomen ist,
die mehreren Ra-Gruppen gleich oder voneinander verschieden sind und jeweils unabhängig Wasserstoff oder eine Elektronendonorgruppe darstellen, und
n eine ganze Zahl von 1 bis 3 ist;
oder
die Benzodioxol-basierte Verbindung oder die Benzodioxan-basierte Verbindung eine Verbindung ist, die durch die folgende chemische Formel 1-1 oder chemische Formel 1-2 dargestellt wird:

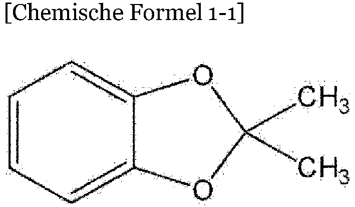

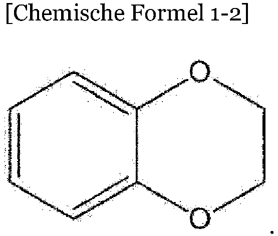

2. Elektrolytlösung für die Lithium-Sekundärbatterie nach Anspruch 1, wobei die mehreren Ra-Gruppen gleich oder voneinander verschieden sind und jeweils unabhängig ein Substituent mit einer Hammet-Substituentenkonstante von o oder weniger sind.

3. Elektrolytlösung für die Lithium-Sekundärbatterie nach Anspruch 1, wobei die mehreren Ra-Gruppen gleich oder voneinander verschieden sind und jeweils unabhängig ausgewählt sind aus der Gruppe bestehend aus Wasserstoff, einer Aminogruppe, einer Alkylaminogruppe mit 1 bis 10 Kohlenstoffatomen, einer Dialkylaminogruppe mit 2 bis 20 Kohlenstoffatomen, einer Arylaminogruppe mit 6 bis 10 Kohlenstoffatomen, einer Diarylaminogruppe mit 12 bis 20 Kohlenstoffatomen, einer Hydroxylgruppe, einer Alkylgruppe mit 1 bis 10 Kohlenstoffatomen, einer Arylgruppe mit 6 bis 10 Kohlenstoffatomen, einer Alkoxygruppe mit 1 bis 10 Kohlenstoffatomen, einer Allylgruppe.

4. Elektrolytlösung für die Lithium-Sekundärbatterie nach Anspruch 1, wobei das Lithiumsalz mindestens eines ist, ausgewählt aus der Gruppe bestehend aus LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂FₛSO₂)₂, LiN(SO₂F)₂ und niederaliphatischem Lithiumcarboxylat.

5. Elektrolytlösung für die Lithium-Sekundärbatterie nach Anspruch 1, wobei der lineare Ether ausgewählt ist aus der Gruppe bestehend aus Dimethylether, Diethylether, Dipropylether, Dibutylether, Diisobutylether, Ethylmethylether, Ethylpropylether, Ethyl-tert-butylether, Dimethoxymethan, Trimethoxymethan, Dimethoxyethan, Diethoxyethan, Dimethoxypropan, Diethylenglykoldimethylether, Diethylenglykoldiethylether, Triethylenglykoldimethylether, Tetraethylenglykoldimethylether, Ethylenglykoldivinylether, Diethylenglykoldivinylether, Triethylenglykoldivinylether, Dipropylenglykoldimethylether, Butylenglykolether, Diethylenglykolethylmethylether, Diethylenglykolisopropylmethylether, Diethylenglykolbutylmethylether, Diethylenglykol-tert-butylethylether und Ethylenglykolethylmethylether.

6. Elektrolytlösung für die Lithium-Sekundärbatterie nach Anspruch 1, wobei der cyclische Ether ausgewählt ist aus der Gruppe bestehend aus Dioxolan, Methyldioxolan, Dimethyldioxolan, Vinyldioxolan, Methoxydioxolan, Ethylmethyldioxolan, Oxan, Dioxan, Trioxan, Tetrahydrofuran, Methyltetrahydrofuran, Dimethyltetrahydrofuran, Dimethoxytetrahydrofuran, Ethoxytetrahydrofuran, Dihydropyran, Tetrahydropyran, Furan und 2-Methylfuran.

7. Elektrolytlösung für die Lithium-Sekundärbatterie nach Anspruch 1, ferner umfassend eine Salpetersäure-basierte Verbindung.

8. Elektrolytlösung für die Lithium-Sekundärbatterie nach Anspruch 9, wobei die Salpetersäure-basierte Verbindung mindestens eine ist, ausgewählt aus der Gruppe bestehend aus Lithiumnitrat, Kaliumnitrat, Cäsiumnitrat, Bariumnitrat, Ammoniumnitrat, Methylnitrat, Dialkylimidazoliumnitrat, Guanidinnitrat, Imidazoliumnitrat und Pyridiniumnitrat.

9. Lithium-Sekundärbatterie, umfassend die Elektrolytlösung nach einem der Ansprüche 1 bis 8; eine positive Elektrode; eine negative Elektrode; und einen Separator.

10. Lithium-Sekundärbatterie nach Anspruch 9, wobei die Lithium-Sekundärbatterie eine Lithium-Schwefel-Sekundärbatterie ist.

## Revendications

1. Solution d'électrolyte pour une batterie rechargeable au lithium comprenant un sel de lithium, un solvant non aqueux et un additif,
dans laquelle l'additif contient un composé à base de benzo-dioxole ou un composé à base de benzo-dioxane, et
le composé à base de benzo-dioxole ou le composé à base de benzo-dioxane a un hydrogène ou un groupe donneur d'électrons à la position du carbone entre deux atomes d'oxygène ; et
le solvant non aqueux comprend un éther linéaire et un éther cyclique ;
dans laquelle la teneur du composé à base de benzo-dioxole ou du composé à base de benzo-dioxane est 0,1 % en poids à 5 % en poids sur la base du poids total de la solution d'électrolyte ; et
dans laquelle le composé à base de benzo-dioxole ou le composé à base de benzo-dioxane est un composé représenté par la Formule chimique 1 ci-dessous : 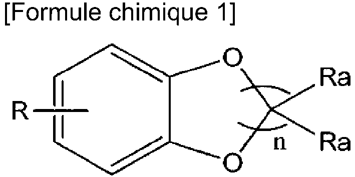
dans laquelle, le groupe R est un groupe alkyle ayant 1 à 6 atomes de carbone non substitué ou substitué, un groupe aryle ayant 6 à 10 atomes de carbone non substitué ou substitué ou un groupe hétéroaryle ayant 5 à 10 atomes de carbone non substitué ou substitué,
la pluralité de groupes Ra sont identiques ou différents les uns des autres, et chacun indépendamment représente un hydrogène ou un groupe donneur d'électrons, et
n est un nombre entier de 1 à 3 ;
ou
le composé à base de benzo-dioxole ou le composé à base de benzo-dioxane est un composé représenté par la Formule chimique 1-1 ou la Formule chimique 1-2 ci-dessous :

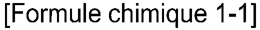

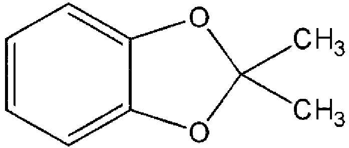

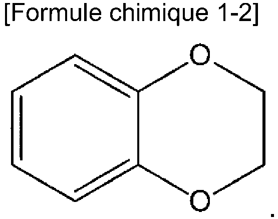

2. Solution d'électrolyte pour la batterie rechargeable au lithium selon la revendication 1, dans laquelle la pluralité de groupes Ra sont identiques ou différents les uns des autres, et sont chacun indépendamment un substituant ayant une constante de substituant de Hammett de 0 ou moins.

3. Solution d'électrolyte pour la batterie rechargeable au lithium selon la revendication 1, dans laquelle la pluralité de groupes Ra sont identiques ou différents les uns des autres, et chacun indépendamment est sélectionné dans le groupe constitué d'un hydrogène, un groupe amino, un groupe alkylamino ayant 1 à 10 atomes de carbone, un groupe dialkylamino ayant 2 à 20 atomes de carbone, un groupe arylamino ayant 6 à 10 atomes de carbone, un groupe diarylamino ayant 12 à 20 atomes de carbone, un groupe hydroxyle, un groupe alkyle ayant 1 à 10 atomes de carbone, un groupe aryle ayant 6 à 10 atomes de carbone, un groupe alkoxy ayant 1 à 10 atomes de carbone un groupe allyle, .

4. Solution d'électrolyte pour la batterie rechargeable au lithium selon la revendication 1, dans laquelle le sel de lithium est un ou plusieurs éléments sélectionnés dans le groupe constitué de LiCl, LiBr, Lil, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂ et carboxylate aliphatique inférieur de lithium.

5. Solution d'électrolyte pour la batterie rechargeable au lithium selon la revendication 1, dans laquelle l'éther linéaire est sélectionné dans le groupe constitué d'un éther de diméthyle, un éther de diéthyle, un éther de dipropyle, un éther de dibutyle, un éther de diisobutyle, un éther d'éthylméthyle, un éther d'éthylpropyle, un éther d'éthyle tert-butyle, un diméthoxyméthane, un triméthoxyméthane, un diméthoxyéthane, un diéthoxyéthane, un diméthoxypropane, un éther de diméthyle de diéthylène glycol, un éther de diéthyle de diéthylène glycol, un éther de diméthyle de triéthylène glycol, un éther de diméthyle de tétraéthylène glycol, un divinyléther d'éthylène glycol, un divinyléther de diéthylène glycol, un divinyléther de triéthylène glycol, un éther de diméthylène de dipropylène glycol, un éther de butylène glycol, un éther d'éthylméthyle de diéthylène glycol, un éther d'isopropylméthyle de diéthylène glycol, un éther de butylméthyle de diéthylène glycol, un éther de tert-butyléthyle de diéthylène glycol et un éther d'éthylméthyle d'éthylène glycol.

6. Solution d'électrolyte pour la batterie rechargeable au lithium selon la revendication 1, dans laquelle l'éther cyclique est sélectionné dans le groupe constitué de dioxolane, méthyldioxolane, diméthyldioxolane, vinyldioxolane, méthoxydioxolane, éthylméthyldioxolane, oxane, dioxane, trioxane, tétrahydrofurane, tétrahydrofurane de méthyle, tétrahydrofurane de diméthyle, tétrahydrofurane de diméthoxy, tétrahydrofurane d'éthoxy, dihydropyrane, tétrahydropyrane, furane et 2-méthylfurane.

7. Solution d'électrolyte pour la batterie rechargeable au lithium selon la revendication 1, comprenant en outre un composé à base d'acide nitrique.

8. Solution d'électrolyte pour la batterie rechargeable au lithium selon la revendication 9, dans laquelle le composé à base d'acide nitrique est un ou plusieurs éléments sélectionnés dans le groupe constitué de nitrate de lithium, nitrate de potassium, nitrate de césium, nitrate de baryum, nitrate d'ammonium, nitrate de méthyle, nitrate de dialkyle imidazolium, nitrate de guanidine, nitrate d'imidazolium et nitrate de pyridinium.

9. Batterie rechargeable au lithium comprenant la solution d'électrolyte selon l'une quelconque des revendications 1 à 8 ; une électrode positive ; une électrode négative ; et un séparateur.

10. Batterie rechargeable au lithium selon la revendication 9, dans laquelle la batterie rechargeable au lithium est une batterie rechargeable au lithium-soufre.
